(19) **Europäisches Patentamt European Patent Office Office européen des brevets**

(11) **EP 1 296 156 B1**

(12) **FASCICULE DE BREVET EUROPEEN**

(45) Date de publication et mention
de la délivrance du brevet:
**28.01.2009 Bulletin 2009/05**

(51) Int Cl.:
***G01S 11/02*** *(2006.01)*

(21) Numéro de dépôt: **01122581.0**

(22) Date de dépôt: **25.09.2001**

(54) **Procédé et dispositif d'estimation de la vitesse d'un terminal mobile, en particulier un téléphone mobile cellulaire capable de fonctionner selon la norme UMTS**

Verfahren und Vorrichtung zur Geschwindigkeitsschätzung eines Mobilendgerätes insbesondere zellulares Mobiltelefon mit UMTS Fähigkeit

Method and device for estimating the speed of a mobile terminal, especially of a cellular mobile telephone with UMTS capability

(84) Etats contractants désignés:
**DE FR GB IT**

(43) Date de publication de la demande:
**26.03.2003 Bulletin 2003/13**

(73) Titulaire: **STMicroelectronics N.V.**
**1077 XX Amsterdam (NL)**

(72) Inventeur: **Bonhomme, Corinne**
**01630 Sergy (FR)**

(74) Mandataire: **Casalonga, Axel**
**Bureau Casalonga & Josse**
**Bayerstrasse 71/73**
**80335 München (DE)**

(56) Documents cités:
**EP-A- 1 014 107           WO-A-98/59515**

**Description**

L'invention concerne d'une façon générale les systèmes de communication sans fil, notamment ceux destinés à fonctionner selon la norme UMTS.

Dans un système de communication sans fil, une station de base communique avec une pluralité de terminaux distants, tels que des téléphones mobiles cellulaires. Les accès multiples par division de fréquence (FDMA : "Fréquency-Division Multiple Access" en langue anglaise) et les accès multiples par division temporelle (TDMA : "Time Division Multiple Access" en langue anglaise) sont les schémas d'accès multiples traditionnels pour délivrer des services simultanés à un certain nombre de terminaux. L'idée de base sous-jacente aux systèmes FDMA et TDMA consiste à partager la ressource disponible, respectivement en plusieurs fréquences ou en plusieurs intervalles temporels, de telle sorte que plusieurs terminaux peuvent fonctionner simultanément sans provoquer d'interférence.

Les téléphones fonctionnant selon la norme GSM appartiennent aux systèmes FDMA et TDMA en ce sens que l'émission et la réception s'effectuent à des fréquences différentes et également à des intervalles temporels différents.

A l'opposé de ces systèmes utilisant une division de fréquence ou une division temporelle, les systèmes CDMA (Système à accès multiples par division de code; "Code Division Multiple Access" en langue anglaise) permettent aux utilisateurs multiples de partager une fréquence commune et un canal temporel commun en utilisant une modulation codée. Parmi les systèmes CDMA on peut citer le système CDMA 2000, le système WCDMA ("Wide Band CDMA" en langue anglaise; CDMA large bande) ou la norme IS-95.

Dans les systèmes CDMA, comme il est bien connu par l'homme du métier, un code d'embrouillage ("scrambling code" en langue anglaise) est associé à chaque station de base et permet de distinguer une station de base d'une autre. En outre, un code orthogonal, connu par l'homme du métier sous la dénomination de "Code OVSF", est alloué à chaque terminal distant (comme par exemple un téléphone mobile cellulaire). Tous les codes OVSF sont orthogonaux entre eux, ce qui permet de distinguer un terminal distant d'un autre.

Avant d'émettre un signal sur le canal de transmission à destination d'un terminal distant, le signal a été embrouillé et étalé ("spreaded " en langue anglaise) par la station de base en utilisant le code d'embrouillage de la station de base et le code OVSF du terminal distant.

Dans les systèmes CDMA, on peut encore distinguer ceux qui utilisent une fréquence distincte pour l'émission et la réception (système CDMA-FDD) et ceux qui utilisent une fréquence commune pour l'émission et la réception, mais des domaines temporels distincts pour l'émission et la réception (système CDMA-TDD).

L'invention s'applique avantageusement aux systèmes de communication du type CDMA.

Ceci étant, l'invention s'applique également aux systèmes de communication du type FDMA et TDMA, en particulier aux téléphones GSM et GPRS, et plus généralement aux terminaux utilisant une réception cohérente et en particulier ceux fonctionnant selon la norme UMTS qui doivent être capables par exemple de fonctionner à la fois sous un système CDMA, comme le système WCDMA, et sous un système FDMA et TDMA.

L'invention concerne plus particulièrement l'estimation de la vitesse de déplacement d'un terminal mobile, en particulier un téléphone mobile cellulaire.

Comme indiqué ci-avant, chaque station de base du système de communication rayonne dans une cellule et dialogue par conséquent avec tous les téléphones qui se situent dans cette cellule. Lorsque l'utilisateur d'un téléphone se déplace pour venir en bordure de cellule, la station de base peut décider, en fonction de paramètres spécifiques mesurés par le téléphone, de passer la main à une autre station debase.

Or, l'estimation de la vitesse de déplacement du téléphone mobile est un paramètre qui peut être pris en compte par la station de base pour sa prise de décision quant au transfert vers une autre station de base.

L'estimation de la vitesse peut aussi être utilisée pour améliorer le contrôle de la puissance de réception du signal.

Il existe de nombreuses solutions pour estimer la vitesse de déplacement d'un mobile, la plupart de ces solutions étant basées sur le calcul de l'autocorrélation du signal. La principale difficulté est alors d'estimer la vitesse à partir du résultat de cette autocorrélation.

WO 98/59515 A décrit un algorithme d'estimation de vitesse d'un mobile basé sur le signal reçu.

L'invention apporte une autre solution au problème de l'estimation de la vitesse de déplacement d'un terminal mobile.

L'invention propose donc un procédé d'estimation de la vitesse de déplacement d'un terminal mobile dialoguant avec une station de base par l'intermédiaire d'un canal de transmission.

Selon une caractéristique générale de l'invention, le procédé comporte une estimation de canal de façon à estimer l'évanouissement (« fading » en langue anglaise) du canal. On effectue alors une autocorrélation de l'évanouissement de façon à obtenir un premier résultat d'autocorrélation.

Le procédé comporte par ailleurs une prédétermination pour différentes valeurs de vitesses prédéterminées de déplacement du terminal mobile, de différents résultats d'autocorrélation de référence obtenus en utilisant une fonction d'autocorrélation supposée connue de l'évanouissement, par exemple en utilisant un modèle de Jake bien connu de l'homme du métier, qui comporte une fonction de Bessel du premier type d'ordre zéro.

On compare alors le premier résultat d'autocorrélation et les différents résultats d'autocorrélation de référence et on estime la vitesse de déplacement du terminal mobile en fonction du résultat de la comparaison.

En d'autres termes, on sélectionne par exemple le résultat d'autocorrélation de référence qui est le plus proche du premier résultat d'autocorrélation, et la vitesse de déplacement associée à ce résultat d'autocorrélation de référence sélectionné est alors la vitesse de déplacement estimée du terminal mobile.

Pour calculer l'autocorrélation de l'évanouissement, on peut calculer une autocorrélation normalisée d'un seul coefficient d'évanouissement, par exemple celui associé au trajet qui présente le meilleur rapport signal/bruit. A cet égard, le nombre de valeurs successives du coefficient que l'on va utiliser pour calculer la fonction d'autocorrélation, conditionne la vitesse minimale que l'on souhaite estimer. Par exemple, une autocorrélation effectuée sur 30 valeurs successives permet d'obtenir une vitesse minimale observable d'environ 10 km/h, ce qui est en général suffisant pour les applications courantes.

Le premier résultat d'autocorrélation est alors un vecteur de longueur choisie et les différents résultats d'autocorrélation de référence sont différents vecteurs de même longueur résultant de l'autocorrélation normalisée de ce coefficient obtenue avec ladite fonction d'autocorrélation supposée connue.

En variante, au lieu d'utiliser une autocorrélation normalisée d'un seul coefficient d'évanouissement, on peut combiner les valeurs des différents coefficients d'évanouissement en les pondérant par les rapports signal/bruit respectifs, sachant que la vitesse est globale pour le canal de transmission multi-trajets, c'est-à-dire qu'elle est la même quel que soit le trajet.

L'invention a également pour objet un dispositif d'estimation de la vitesse de déplacement d'un terminal mobile dialoguant avec une station de base par l'intermédiaire d'un canal de transmission.

Selon une caractéristique générale de l'invention, le dispositif comporte :

- des moyens d'estimation de canal aptes à effectuer une estimation de canal de façon à estimer l'évanouissement du canal,
- des premiers moyens d'autocorrélation aptes à effectuer une autocorrélation d'évanouissement de façon à obtenir un premier résultat d'autocorrélation,
- une mémoire pour stocker, pour différentes valeurs de vitesses prédéterminées de déplacement du terminal mobile, différents résultats d'autocorrélation de référence précalculés et obtenus en utilisant une fonction d'autocorrélation supposée connue de l'évanouissement,
- des moyens de comparaison aptes à effectuer une comparaison entre le premier résultat d'autocorrélation et les différents résultats d'autocorrélation de référence, et
- des moyens d'estimation de vitesse aptes à effectuer une estimation de la vitesse de déplacement du terminal mobile en fonction du résultat de ladite comparaison.

L'invention a également pour objet un terminal mobile incorporant un dispositif d'estimation de vitesse tel que défini ci-avant, ce terminal mobile pouvant être un téléphone mobile cellulaire.

D'autres avantages et caractéristiques de l'invention apparaîtront à l'examen de la description détaillée de modes de mise en oeuvre et de réalisation, nullement limitatifs, et des dessins annexés, sur lesquels :

- la figure 1 illustre de façon schématique une architecture de principe d'un téléphone mobile cellulaire selon l'invention, incorporant un dispositif d'estimation de vitesse selon l'invention ;
- la figure 2 illustre plus en détail, mais toujours de façon schématique, une architecture interne d'un dispositif d'estimation de vitesse selon l'invention ; et
- la figure 3 représente de façon schématique un organigramme d'un mode de mise en oeuvre d'un procédé selon l'invention.

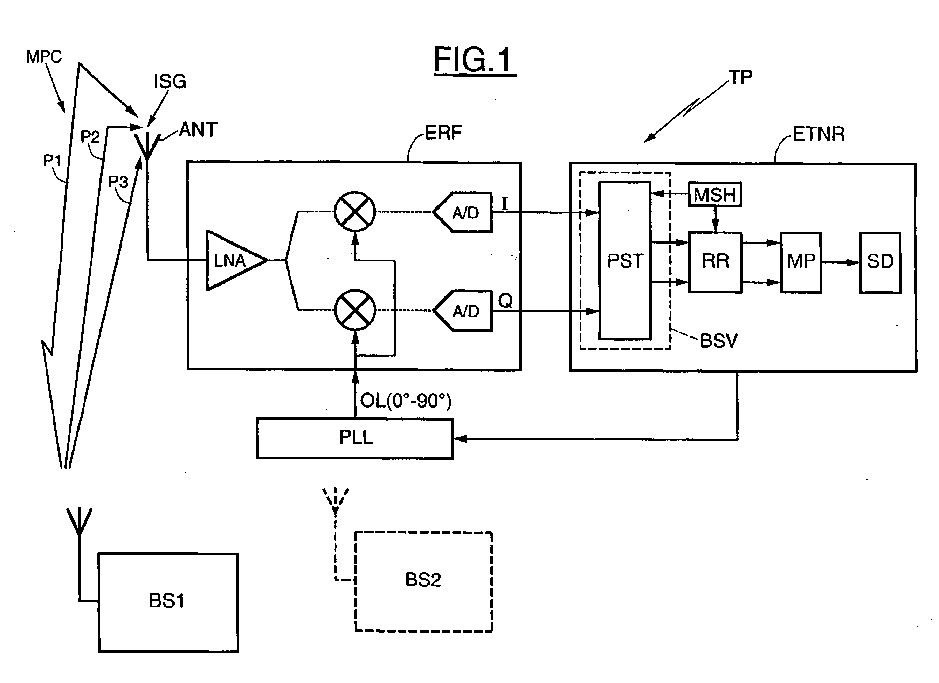

Sur la figure 1, la référence TP désigne un terminal distant, tel qu'un téléphone mobile cellulaire, qui est en communication avec une station de base BS1, par exemple selon un schéma de communication du type CDMA.

Le téléphone mobile cellulaire comprend, de façon classique, un étage analogique radiofréquence ERF connecté à une antenne ANT pour recevoir un signal d'entrée ISG.

Classiquement, l'étage ERF comprend un amplificateur faible bruit LNA et deux voies de traitement comportant des mélangeurs, des filtres et amplificateurs classiques (non représentés sur la figure 1 à des fins de simplification). Les deux mélangeurs reçoivent respectivement de la part d'une boucle à verrouillage de phase PLL deux signaux présentant mutuellement une différence de phase de 90°. Après transposition de fréquence dans les mélangeurs, les deux voies de traitement définissent respectivement deux flux I (flux direct) et Q (flux en quadrature) selon une dénomination bien connue de l'homme du métier.

Après conversion numérique dans des convertisseurs analogiques/numériques, les deux flux I et Q sont délivrés à un étage de traitement de réception ETNR.

En raison des réflexions possibles du signal initialement transmis, sur des obstacles se situant entre la station de base et le téléphone mobile, le milieu de transmission est en fait un milieu de transmission multi-trajets MPC, c'est-à-dire comprenant plusieurs chemins de transmission différents (trois chemins de transmission P1, P2, P3 sont représentés sur la figure 1). En conséquence, le signal ISG qui est reçu par le téléphone mobile comporte différentes versions temporellement retardées du signal initialement transmis, versions qui sont le résultat des caractéristiques de transmission multi-trajets du milieu de transmission. Et, chaque trajet introduit un retard différent.

L'étage de traitement ETNR comporte un dispositif PST de détermination des coefficients d'évanouissement des trajets du canal de transmission multi-trajets.

Comme on le verra plus en détail ci-après, ce dispositif PST, qui est en fait un moyen d'estimation de canal, fait partie d'un dispositif BSV d'estimation de la vitesse de déplacement du téléphoné TP. Les différents moyens constituant le dispositif BSV peuvent être réalisés de façon logicielle au sein d'un microprocesseur, ou bien, au moins pour certains d'entre eux, de façon câblée au sein d'un circuit intégré.

Si l'on revient maintenant aux caractéristiques du canal de transmission, les différents retards temporels τ des différents trajets du canal multi-trajets sont estimés par une unité de recherche MSH et peuvent être continuellement suivis par exemple par une boucle à verrouillage numérique.

La structure d'une unité de recherche et d'une unité de suivi sont bien connues de l'homme du métier. Brièvement, les multi-trajets qui arrivent à l'unité de recherche conduisent à l'obtention de pics de corrélation se produisant à différents instants. L'amplitude d'un pic est proportionnel à l'enveloppe du signal du trajet, et l'instant de chaque pic, relativement à la première arrivée, donne une mesure du retard du trajet correspondant. Les informations sur ces retards, qui fournissent également le nombre de doigts du récepteur Rake, sont délivrées par l'unité MSH au récepteur Rake RR.

Le récepteur Rake RR, qui équipe un téléphone mobile cellulaire fonctionnant dans un système de communication CDMA, est utilisé pour effectuer l'alignement temporel, le désembrouillage, le désétalement et la combinaison des versions retardées du signal initialement transmis, de façon à délivrer les flux d'informations contenus dans le signal initial. Bien entendu, le signal reçu ISG pourrait également résulter de la transmission de signaux initiaux respectivement émis par différentes stations de base BS1 et BS2.

Le récepteur Rake RR est suivi par des moyens classiques de démodulation MP qui effectuent la démodulation de la constellation délivrée par le récepteur Rake RR.

L'étage de traitement ETNR comprend également de façon classique un décodeur de source SD qui effectue un décodage de source bien connu par l'homme du métier.

Enfin, comme il est également bien connu par l'homme du métier, la boucle à verrouillage de phase PLL est commandée par un algorithme de contrôle automatique de fréquence incorporé dans un processeur de l'étage ETNR.

Ainsi qu'il est bien connu de l'homme du métier, avant transmission via l'antenne de la station de base BS1, le signal initial contenant les informations (symboles) est embrouillé ("scrambled" en langue anglaise) et étalé ("spreaded") par des moyens de traitement de la station de base, en utilisant le code d'embrouillage ("scrambling code") de la station de base et le code orthogonal (code OVSF) du téléphone TP.

En conséquence, les symboles sont transformés en fragments ("chips" en langue anglaise) ayant une longueur prédéterminée (par exemple égale à 260 ns), et correspondant à un taux de fragments prédéterminé (chip rate) égal par exemple à 3,84 Mcps. Ainsi, le taux de fragments (chip rate) est plus grand que le taux de symboles (symbol rate).

Ainsi, un symbole peut être transformé en un nombre de fragments pouvant aller de 4 à 256.

Les informations émises par la station de base et formées de fragments, sont véhiculées au sein de trames successives TRR subdivisées chacune en un nombre prédéterminé d'intervalles ("slots" en langue anglaise) SLi. A titre indicatif, chaque trame TRR, ayant une longueur de 10 ms, est subdivisée en quinze intervalles SL0-SL14, chaque intervalle ayant une longueur égale à 2560 fragments.

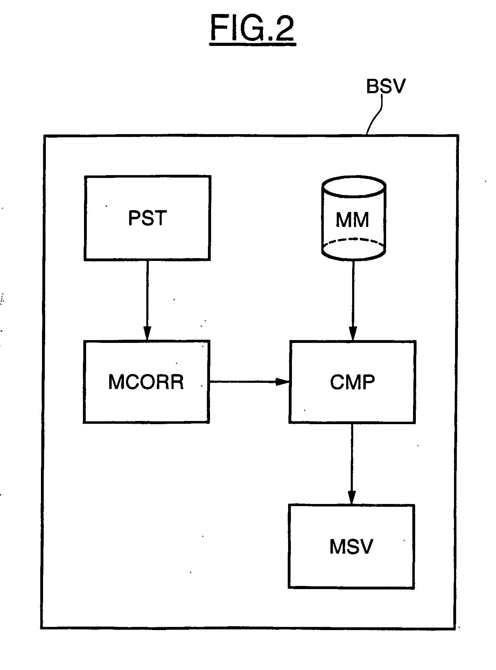

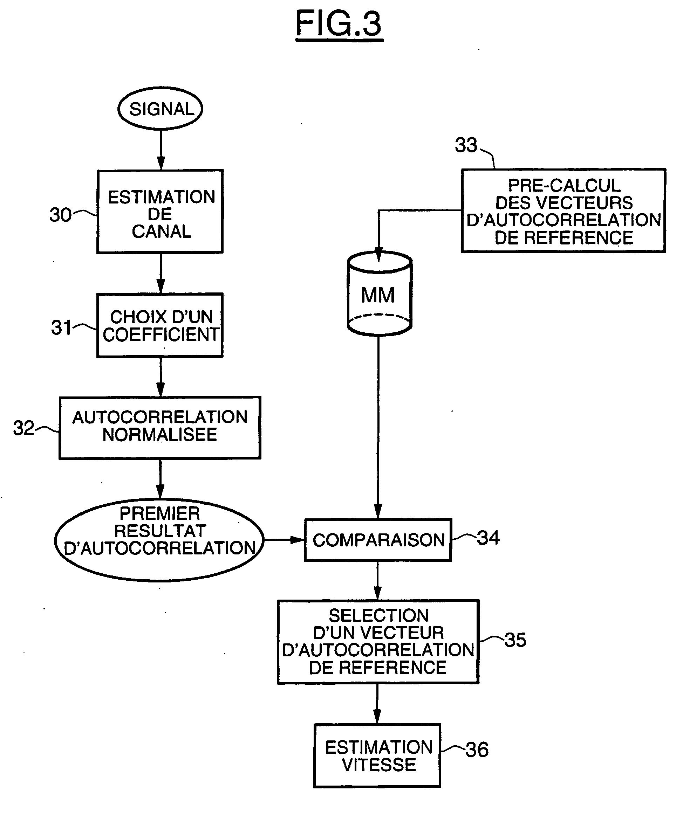

On va maintenant décrire plus en détail, en se référant plus particulièrement aux figures 2 et 3, l'architecture et le fonctionnement du dispositif d'estimation de vitesse BSV selon l'invention.

Dans le cadre de l'estimation de canal, nécessaire pour la réception cohérente comme c'est le cas pour la norme UMTS, les moyens d'estimation PST estiment, à chaque intervalle (« slot »)et pour chaque doigt, la phase et l'amplitude de l'évanouissement (« fading »). Cette estimation peut se faire par toute technique bien connue de sondage de canal, par exemple par une simple corrélation du signal reçu avec le produit du code d'étalement et du code d'embrouillage (étape 30, figure 3).

En d'autres termes, à chaque doigt du récepteur Rake, c'est-à-dire à chaque trajet du canal multi-trajets, est associé un coefficient d'évanouissement. Ce coefficient est un coefficient complexe, qui est variable dans le temps. Et, à chaque intervalle (« slot »), les moyens PST délivrent la valeur courante de chaque coefficient d'évanouissement. Ces valeurs sont ensuite délivrées au récepteur Rake RR et elles vont être également utilisées dans le cadre de l'estimation de vitesse selon l'invention.

A cet égard, la collecte de ces coefficients d'évanouissement échantillonnés à la cadence d'une valeur par intervalle permet de construire un premier résultat d'autocorrélation. Ceci est effectué par des premiers moyens d'autocorrélation MCORR.

Plus précisément, le résultat de l'autocorrélation d'un coefficient λ sur une fenêtre de N valeurs successives, par exemple 30 correspondant à une durée de 20 ms, est un vecteur R de longueur choisie L, c'est-à-dire ayant L composantes. Ce vecteur R(k) avec k variant de 0 à L-1, est défini par la formule (1) ci-dessous :

$$R(k) = \left( \sum_{n=0}^{N} \lambda_n \lambda^*_{n+k} \right) / R(0) \qquad (1)$$

dans laquelle R(0) représente le module au carré du coefficient d'évanouissement, et « * » désigne le conjugué complexe.

En fait, l'utilisation d'une telle autocorrélation normalisée permet de n'utiliser qu'un seul des coefficients d'évanouissement déterminé par les moyens PST. A cet égard, on pourra choisir par exemple celui associé au trajet qui présente le plus fort rapport signal/bruit (étapes 31 et 32).

Par ailleurs, le dispositif BSV comporte une mémoire MM qui stocke un certain nombre de résultats d'autocorrélation de référence précalculés et obtenus en utilisant une fonction de corrélation supposée connue. A cet égard, on peut utiliser le modèle de Jake, bien connu de l'homme du métier, qui est le modèle d'autocorrélation généralement adopté en milieu urbain. Plus précisément, dans ce cas, le vecteur d'autocorrélation normalisée de référence associé à chaque coefficient d'évanouissement, de longueur L (k variant de 0 à L-1), est défini par la formule (2) ci-dessous :

$$A(k) = J_o (2\pi f_D k) \qquad (2)$$

Dans cette formule, $J_o$ désigne la fonction de Bessel du premier type d'ordre 0 et $f_D$ désigne la fréquence Doppler normalisée qui est égale au produit de la fréquence porteuse (par exemple 2 GHz) par le rapport entre la vitesse de déplacement du téléphone et la vitesse de la lumière.

On remarque donc que chaque vecteur d'autocorrélation de référence dépend de la vitesse de déplacement du téléphone. Aussi, on précalcule et on tabule les vecteurs d'autocorrélation de référence pour diverses valeurs de vitesse. (Etape 33, figure 3)

Puis, lorsque les données d'estimation de l'autocorrélation calculées à l'étape 32 deviennent statistiquement fiables, en général au bout d'un seconde, des moyens de comparaison CMP effectuent (étape 34) une comparaison entre le vecteur d'autocorrélation normalisée R et l'ensemble des vecteurs d'autocorrélation de référence stockés dans la mémoire MM.

Plus précisément, ces moyens CMP vont (étape 35, figure 3) sélectionner parmi les vecteurs d'autocorrélation stockés, celui qui est le plus ressemblant, par exemple au sens d'une distance euclidienne, au vecteur d'autocorrélation normalisée R.

Des moyens d'estimation de vitesse MSV estiment alors la vitesse (étape 36) comme étant celle associée aux vecteurs de référence sélectionnés.

L'invention n'est pas limitée au mode de réalisation et de mise en oeuvre qui vient d'être décrit, mais en embrasse toutes les variantes.

Ainsi, dans le cadre de l'UMTS, on estime une valeur de coefficient d'évanouissement par intervalle (« slot »), un intervalle durant 0,667 ms. La vitesse maximale que l'on pourra estimer est donc d'environ 400 km/h. Dans une telle application, cette valeur maximale est largement suffisante. Néanmoins, dans d'autres applications, on peut augmenter cette vitesse maximale en estimant plus d'une valeur de coefficient par intervalle.

Par ailleurs, comme indiqué ci-avant, la vitesse minimale observable dépend du nombre de valeurs que l'on va utiliser pour calculer la fonction d'autocorrélation. Avec 30 valeurs, ceci implique que la vitesse de déplacement du mobile est remise à jour tous les 30 intervalles, soit toutes les 20 ms.

Par ailleurs, compte tenu que la vitesse de déplacement du mobile change peu rapidement dans le temps (comparée à 20 ms), on peut prévoir par exemple une moyenne glissante de ces mesures sur une cinquantaine de mesures par exemple, ce qui accroît la fiabilité de la mesure.

Enfin, le nombre de vecteurs de référence stockés dépend de l'application envisagée. Ainsi, lorsque l'on a surtout besoin de différencier un mobile rapide d'un mobile lent, il est nécessaire de stocker moins de vecteurs d'autocorrélation de référence que dans le cas où l'on a besoin de plus de finesse dans l'estimation de la vitesse de déplacement.

## Revendications

1. Procédé d'estimation de la vitesse de déplacement d'un terminal mobile dialoguant avec une station de base par l'intermédiaire d'un canal de transmission, **caractérisé par le fait qu'**il comporte une estimation de canal (30) de façon à estimer l'évanouissement du canal, une autocorrélation de l'évanouissement de façon à obtenir un premier résultat d'autocorrélation, une prédétermination (33) pour différentes valeurs de vitesses prédéterminées de déplacement du terminal mobile, de différents résultats d'autocorrélation de référence obtenus en utilisant une fonction d'autocorrélation supposée connue de l'évanouissement, une comparaison (34) entre le premier résultat d'aucorrélation et les différents résultats d'autocorrélation de référence, et une estimation (36) de la vitesse de déplacement du terminal mobile en fonction du résultat de ladite comparaison.

2. Procédé selon la revendication 1, **caractérisé par le fait qu'**on effectue l'autocorrélation (32) de l'évanouissement sur une durée choisie en fonction de la vitesse minimale de déplacement qu'on souhaite observer.

3. Procédé selon la revendication 1 ou 2, **caractérisé par le fait que** l'autocorrélation de l'évanouissement est une autocorrélation normalisée (32) d'un coefficient d'évanouissement, ledit premier résultat étant un vecteur de longueur choisie, et par le fait les différents résultats d'autocorrélation de référence sont différents vecteurs de même longueur résultant de l'autocorrélation normalisée de ce coefficient obtenue avec ladite fonction d'autocorrélation supposée connue.

**4.** Procédé selon la revendication 1, 2 ou 3, **caractérisé par le fait que** ladite fonction d'autocorrélation supposée connue comporte une fonction de Bessel du premier type d'ordre zéro ($J_o$).

**5.** dispositif d'estimation de la vitesse de déplacement d'un terminal mobile dialoguant avec une station de base par l'intermédiaire d'un canal de transmission, **caractérisé par le fait qu'**il comporte des moyens d'estimation de canal (PST) aptes à effectuer une estimation de canal de façon à estimer l'évanouissement du canal, des premiers moyens d'autocorrélation (MCORR) aptes à effectuer une autocorrélation de l'évanouissement de façon à obtenir un premier résultat d'autocorrélation, une mémoire (MM) pour stocker, pour différentes valeurs de vitesses prédéterminées de déplacement du terminal mobile, différents résultats d'autocorrélation de référence précalculés et obtenus en utilisant une fonction d'autocorrélation supposée connue de l'évanouissement, des moyens de comparaison (CMP) aptes à effectuer une comparaison entre le premier résultat d'aucorrélation et les différents résultats d'autocorrélation de référence, et des moyens d'estimation de vitesse (MSV) aptes à effectuer une estimation de la vitesse de déplacement du terminal mobile en fonction du résultat de ladite comparaison.

**6.** Dispositif selon la revendication 5, **caractérisé par le fait que** les premiers moyens d'autocorrélation (MCORR) sont aptes à effectuer une autocorrélation normalisée d'un coefficient d'évanouissement, ledit premier résultat étant un vecteur de longueur choisie, et par le fait les différents résultats d'autocorrélation de référence sont différents vecteurs de même longueur résultant de l'autocorrélation normalisée de ce coefficient obtenue avec ladite fonction d'autocorrélation supposée connue.

**7.** Dispositif selon la revendication 5 ou 6, **caractérisé par le fait que** ladite fonction d'autocorrélation supposée connue comporte une fonction de Bessel du premier type d'ordre zéro ($J_o$).

**8.** Terminal mobile, **caractérisé par le fait qu'**il incorpore un dispositif tel que défini dans l'une des revendications 5 à 7.

**9.** germinal mobile selon la revendication 8, **caracté-**

**risé par le fait qu'**il est constitué d'un téléphone mobile cellulaire.

**Claims**

**1.** Process for estimating the speed of movement of a mobile terminal talking to a base station by way of a transmission channel, **characterized in that** it comprises a channel estimation (30) so as to estimate the fading of the channel, an autocorrelation of the fading so as to obtain a first autocorrelation result, a predetermination (33) for various predetermined values of speeds of movement of the mobile terminal, of various reference autocorrelation results obtained using an autocorrelation function, assumed known, of the fading, a comparison (34) between the first autocorrelation result and the various reference autocorrelation results, and an estimation (36) of the speed of movement of the mobile terminal as a function of the result of the said comparison.

**2.** Process according to Claim 1, **characterized in that** the autocorrelation (32) of the fading is performed over a duration chosen as a function of the minimum speed of movement that one wishes to observe.

**3.** Process according to Claim 1 or 2, **characterized in that** the autocorrelation of the fading is a normalized autocorrelation (32) of a fading coefficient, the said first result being a vector of chosen length, and **in that** the various reference autocorrelation results are various vectors of the same length resulting from this coefficient's normalized autocorrelation obtained with the said autocorrelation function, assumed known.

**4.** Process according to Claim 1, 2 or 3, **characterized in that** the said autocorrelation function, assumed known, comprises a Bessel function of the first type of order zero ($J_0$).

**5.** Device for estimating the speed of movement of a mobile terminal talking to a base station by way of a transmission channel, **characterized in that** it comprises channel estimation means (PST) able to perform a channel estimation so as to estimate the fading of the channel, first autocorrelation means (MCORR) able to perform an autocorrelation of the fading so as to obtain a first autocorrelation result, a memory (MM) for storing, for various predetermined values of speeds of movement of the mobile terminal, various precalculated reference autocorrelation results obtained using an autocorrelation function, assumed known, of the fading, comparison means (CMP) able to perform a comparison between the first autocorrelation result and the various reference autocorrelation results, and speed estimation means (MSV) able to perform an estimation of the speed of movement of the mobile terminal as a function of the result of the said comparison.

6. Device according to Claim 5, **characterized in that** the first autocorrelation means (MCORR) are able to perform a normalized autocorrelation of a fading coefficient, the said first result being a vector of chosen length, and **in that** the various reference autocorrelation results are various vectors of the same length resulting from this coefficient's normalized autocorrelation obtained with the said autocorrelation function, assumed known.

7. Device according to Claim 5 or 6, **characterized in that** the said autocorrelation function, assumed known, comprises a Bessel function of the first type of order zero ($J_0$).

8. Mobile terminal, **characterized in that** it incorporates a device as defined in one of Claims 5 to 7.

9. Mobile terminal according to Claim 8, **characterized in that** it consists of a cellular mobile telephone.

**Patentansprüche**

1. Verfahren zur Schätzung der Fortbewegungsgeschwindigkeit eines mobilen Endgeräts, das über einen Übertragungskanal mit einer Basisstation kommuniziert, **dadurch gekennzeichnet, daß** es aufweist:

   eine Kanalschätzung (30), um den Schwund des Kanals zu schätzen,
   eine Autokorrelation des Schwunds, um ein erstes Autokorrelationsergebnis zu gewinnen,
   eine Vorausberechnung (33) von verschiedenen Referenz-Autokorrelationsergebnissen für verschiedene Werte vorgegebener Fortbewegungsgeschwindigkeiten des mobilen Endgeräts unter Verwendung einer angenommenen bekannten Autokorrelationsfunktion des Schwunds,
   einen Vergleich (34) zwischen dem ersten Autokorrelationsergebnis und den verschiedenen Referenz-Autokorrelationsergebnissen, und
   eine Schätzung (36) der Fortbewegungsgeschwindigkeit des mobilen Endgeräts in Abhängigkeit von dem Ergebnis des Vergleichs.

2. Verfahren nach Anspruch 1, **dadurch gekennzeichnet, daß** die Autokorrelation (32) des Schwunds über eine Zeitdauer durchgeführt wird, die in Abhängigkeit von der minimalen Fortbewegungsgeschwindigkeit, die zu beobachten gewünscht wird, gewählt wird.

3. Verfahren nach Anspruch 1 oder 2, **dadurch gekennzeichnet, daß** die Autokorrelation des Schwunds eine normalisierte Autokorrelation (32) eines Schwundkoeffizienten ist, wobei das erste Ergebnis ein Vektor gewählter Länge ist, und **dadurch**, daß die verschiedenen Referenz-Autokorrelationsergebnisse verschiedene Vektoren derselben Länge sind, die sich aus der normalisierten Autokorrelation dieses Koeffizienten ergeben, die mit der angenommenen bekannten Autokorrelationsfunktion gewonnen wurde.

4. Verfahren nach Anspruch 1, 2 oder 3, **dadurch gekennzeichnet, daß** die angenommene bekannte Autokorrelationsfunktion eine Bessel-Funktion des ersten Typs der Ordnung Null ($J_0$) aufweist.

5. Vorrichtung zur Schätzung der Fortbewegungsgeschwindigkeit eines mobilen Endgeräts, das über einen Übertragungskanal mit einer Basisstation kommuniziert, **dadurch gekennzeichnet, daß** sie aufweist:

   Kanalschätzungseinrichtungen (PST), die in der Lage sind, eine Kanalschätzung durchzuführen, um den Schwund des Kanals zu schätzen,
   erste Autokorrelationseinrichtungen (MCORR), die in der Lage sind, eine Autokorrelation des Schwunds durchzuführen, um ein erstes Autokorrelationsergebnis zu gewinnen,
   einen Speicher (MM), um für verschiedene Werte vorgegebener Fortbewegungsgeschwindigkeiten des mobilen Endgeräts verschiedene Referenz-Autokorrelationsergebnisse zu speichern, die vorab berechnet wurden und unter Verwendung einer angenommenen bekannten Autokorrelationsfunktion des Schwunds gewonnen wurden,
   Vergleichseinrichtungen (CMP), die in der Lage sind, einen Vergleich zwischen dem ersten Autokorrelationsergebnis und den verschiedenen Referenz-Autokorrelationsergebnissen durchzuführen, und
   Geschwindigkeitsschätzungseinrichtungen (MSV), die in der Lage sind, eine Schätzung der Fortbewegungsgeschwindigkeit des mobilen Endgeräts in Abhängigkeit von dem Ergebnis des Vergleichs durchzuführen.

6. Vorrichtung nach Anspruch 5, **dadurch gekennzeichnet, daß** die ersten Autokorrelationseinrichtungen (MCORR) in der Lage sind, eine normalisierte Autokorrelation eines Schwundkoeffizienten durchzuführen, wobei das erste Ergebnis ein Vektor gewählter Länge ist, und **dadurch**, daß die verschiedenen Referenz-Autokorrelationsergebnisse verschiedene Vektoren derselben Länge sind, die sich aus der normalisierten Autokorrelation dieses Koeffizienten ergeben, die mit der angenommenen bekannten Autokorrelationsfunktion gewonnen wurde.

7.  Vorrichtung nach Anspruch 5 oder 6, **dadurch gekennzeichnet, daß** die angenommene bekannte Autokorrelationsfunktion eine Bessel-Funktion des ersten Typs der Ordnung Null ($J_0$) aufweist.

8.  Mobiles Endgerät, **dadurch gekennzeichnet, daß** es eine Vorrichtung, wie sie in einem der Ansprüche 5 bis 7 definiert ist, aufweist.

9.  Mobiles Endgerät nach Anspruch 8, **dadurch gekennzeichnet, daß** es aus einem zellularen Mobiltelefon besteht.

FIG.1

EP 1 296 156 B1

# FIG.2

BSV

# FIG.3

SIGNAL

30 — ESTIMATION DE CANAL

31 — CHOIX D'UN COEFFICIENT

32 — AUTOCORRELATION NORMALISEE

PREMIER RESULTAT D'AUTOCORRELATION

33 — PRE-CALCUL DES VECTEURS D'AUTOCORRELATION DE REFERENCE

MM

COMPARAISON — 34

SELECTION D'UN VECTEUR D'AUTOCORRELATION DE REFERENCE — 35

ESTIMATION VITESSE — 36

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9859515 A